# EUROPÄISCHE PATENTANMELDUNG

(11) **EP 0 660 493 A1**
(43) Veröffentlichungstag der Anmeldung: **28.06.1995**
(21) Anmeldenummer: 94119411.0
(22) Anmeldetag: 07.12.1994
(51) Int. Cl.: H02K 9/28, H02K 9/14

(54) **Doppeldeckel für eine elektrische Maschine**

(30) Priorität: 21.12.1993 ES 9302653
(71) Anmelder: SIEMENS AKTIENGESELLSCHAFT, D-80333 München (DE)
(72) Erfinder: Garcia, Miguel, E-08940 Cornella (ES); Rua, Antonio, E-08940 Cornella (ES)

(57) **Zusammenfassung**

Die Erfindung betrifft einen Doppeldeckel (3) für eine elektrische Maschine, der ein erstes Deckelteil (1) zum Verschließen einer Öffnung (4) in einem Luftführungsmantel (5) und ein zweites Deckelteil (2), das mit dem ersten Deckelteil (1) verbunden ist, zum Verschließen einer öffnung (6) in einem Gehäuseteil (7) umfaßt.

## Beschreibung

Die Erfindung betrifft einen Doppeldeckel für eine elektrische Maschine.

Bei Schleifringläufermotoren ist das bürstenseitige Lagerschild topfförmig ausgebildet und bildet den Einbauraum für den Schleifring. Das bürstenseitige Lagerschild wird deshalb im folgenden als Schleifringkapsel bezeichnet. Die Schleifringkapsel trennt darüber hinaus den Schleifringraum vom Motorraum, so daß kein Bürstenstaub in den Motorraum eindringt. Weiterhin sind die beiden Bedienungsöffnungen in der Schleifringkapsel durch jeweils einen Deckel geschlossen. Sowohl der Motorraum als auch der Schleifringraum sind damit geschlossen. Die elektrische Maschine weist also keine während des Betriebs offene Stellen auf.

Die Schleifringkapsel ist von einer Lüfterhaube mit einer verlängerten Luftführung umschlossen. Durch die Verlängerung der Lüfterhaube liegt die Luftauslaßöffnung damit an der gleichen Stelle wie bei Kurzschlußläufermotoren. Außerdem wird dadurch die Kühlung der Schleifringkapsel und damit die Entwärmung des Schleifringraumes verbessert. Um einen Zugang zum Schleifringraum zu erhalten, weist die Lüfterhaube ebenfalls Öffnungen auf, die mittels eines Deckels verschließbar sind.

Bei Wartungsarbeiten sind an jeder Seite der Schleifringkapsel also jeweils zwei Deckel abzunehmen und anschließend wieder einzusetzen.

Aufgabe der vorliegenden Erfindung ist es, einen Doppeldeckel zu schaffen, durch den bei einer elektrischen Maschine auf einfache Weise eine Öffnung in einem Luftführungsmantel und eine Öffnung in einem Gehäuseteil gleichzeitig geöffnet oder verschlossen werden können.

Die Aufgabe wird erfindungsgemäß durch die Merkmale des Anspruchs 1 gelöst. Vorteilhafte Ausgestaltungen der Erfindung sind in den Ansprüchen 2 bis 9 beschrieben.

Der erfindungsgemäße Doppeldeckel ermöglicht bei einer elektrischen Maschine das gleichzeitige Verschließen bzw. Öffnen einer Öffnung in einem Luftführungsmantel sowie einer Öffnung in einem Gehäuseteil. Das erste Deckelteil verschließt den das Gehäuseteil umschließenden Luftführungsmantel (die Lüfterhaube bei einem Schleifringmotor) weitgehend "leckluftdicht". Das zweite Deckelteil verschließt das Gehäuseteil (die Schleifringkapsel bei einem Schleifringläufermotor) entsprechend der für die elektrische Maschine gewählten Schutzart. Gegebenenfalls sind an dem ersten und/oder an dem zweiten Deckelteil umlaufende Dichtungsringe vorzusehen (Ansprüche 8 und 9). Durch den Doppeldeckel gemäß Anspruch 1 sind also die in zwei Ebenen liegenden Öffnungen auf einfache und sichere Weise gleichzeitig verschließbar.

Gemäß vorteilhafter Ausgestaltungen des erfindungsgemäßen Doppeldeckels kann dieser als Wärmetauscher ausgebildet sein. Der Doppeldeckel weist hierzu - ebenso wie das Gehäuseteil bzw. die Schleifringkapsel - eine Innenverrippung (Anspruch 5) oder eine Innen- und Außenverrippung (Anspruch 6) auf. Die Funktion als Wärmetauscher kann durch ein Material mit guter Wärmeleitfähigkeit (z.B. Aluminium) nochmals verbessert werden.

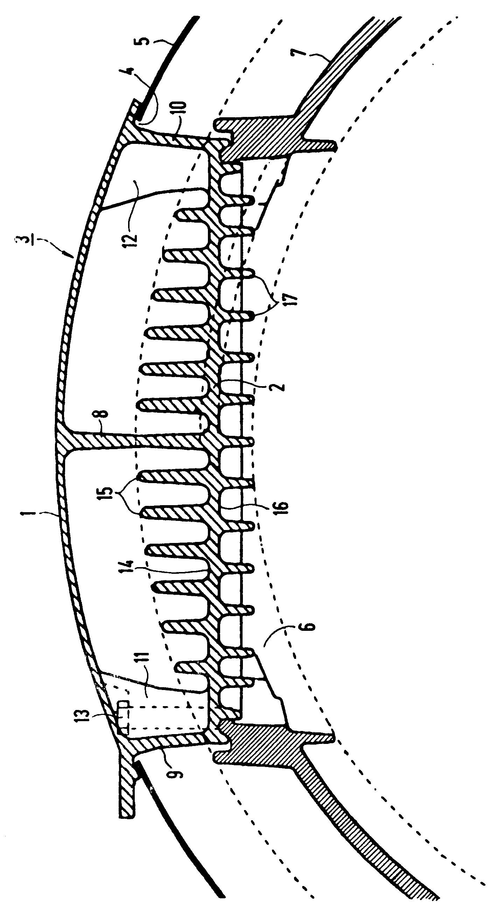

Weitere Vorteile und Einzelheiten der Erfindung ergeben sich aus der nachfolgenden Beschreibung eines Ausführungsbeispiels anhand der Zeichnung und in Verbindung mit den Ansprüchen 2 bis 9.

In der Zeichnung ist mit 1 ein erstes Deckelteil und mit 2 ein zweites Deckelteil eines Doppeldeckels 3 bezeichnet. Das erste Deckelteil 1 dient zum Verschließen einer Öffnung 4 in einem Luftführungsmantel 5, wohingegen das zweite Deckelteil 2 zum Verschließen einer Öffnung 6 in einem Gehäuseteil 7 dient. Bei dem in der Zeichnung dargestellten Schleifringläufermotor wird der Luftführungsmantel 5 von der Lüfterhaube und das Gehäuseteil 7 von der Schleifringkapsel gebildet.

Das erste Deckelteil 1 sowie das zweite Deckelteil 2 sind zueinander beabstandet angeordnet und durch einen Steg 8 sowie durch zwei Seitenwände 9 und 10 miteinander verbunden. Der Steg 8 sowie die Seitenwände 9 und 10 des Doppeldeckels 3 verlaufen parallel zur Längsachse des Schleifringläufermotors und damit parallel zu der in der Lüfterhaube 5 strömenden Kühlluft. Beide Seitenwände 9 und 10 weisen an den Enden des Doppeldeckels 3 Verbreiterungen mit jeweils einer Durchgangsbohrung auf. Von den insgesamt vier Verbreiterungen sind in der Zeichnung nur die Verbreiterungen 11 und 12 sichtbar. In die Durchgangsbohrungen ist jeweils eine in die Schleifringkapsel 7 einschraubbare Befestigungsschraube einsteckbar. In der Zeichnung ist aus Übersichtlichkeitsgründen nur eine Befestigungsschraube 13 gestrichelt dargestellt.

Um die Entwärmung der Schleifringkapsel 7 zu verbessern, ist der Doppeldeckel 3 als Wärmetauscher ausgebildet. Das zweite Deckelteil 2 weist hierzu an seiner Oberseite 14 Kühlrippen 15 und an seiner Unterseite 16 Kühlrippen 17 auf. Die Kühlrippen 15 und 17 verlaufen ebenfalls parallel zur Längsachse des Schleifringläufermotors und damit parallel zu der in der Lüfterhaube 5 strömenden Kühlluft.

Wie aus der Zeichnung ersichtlich ist, ermöglicht der erfindungsgemäße Doppeldeckel 3 bei einer elektrischen Maschine das gleichzeitige Verschließen bzw. Öffnen der Öffnung 4 in der Lüfterhaube 5 sowie der Öffnung 6 in der Schleifringkapsel 7.

## Patentansprüche

1. Doppeldeckel für eine elektrische Maschine, der folgende Merkmale umfaßt:
a) ein erstes Deckelteil (1) zum Verschließen einer Öffnung (4) in einem Luftführungsmantel (5) und
b) ein zweites Deckelteil (2), das mit dem ersten Deckelteil (1) verbunden ist, zum Verschließen einer Öffnung (6) in einem Gehäuseteil (7).

2. Doppeldeckel nach Anspruch 1,
**dadurch gekennzeichnet**,
daß das erste Deckelteil (1) als oberes Deckelteil zum Verschließen einer Öffnung (4) in einer Lüfterhaube (5) ausgebildet ist.

3. Doppeldeckel nach Anspruch 1 oder 2,
**dadurch gekennzeichnet**,
daß das zweite Deckelteil (2) als unteres Deckelteil zum Verschließen einer Öffnung (6) in einer innerhalb des Luftführungsmantels bzw. der Lüfterhaube (5) angeordneten Schleifringkapsel (7) ausgebildet ist.

4. Doppeldeckel nach einem der Ansprüche 1 bis 3,
**dadurch gekennzeichnet**,
daß das erste Deckelteil (1) und das zweite Deckelteil (2) zueinander beabstandet angeordnet sind.

5. Doppeldeckel nach einem der Ansprüche 1 bis 4,
**dadurch gekennzeichnet**,
daß das zweite Deckelteil (2) an seiner dem ersten Deckelteil (1) zugewandten Fläche (14) Kühlrippen (15) aufweist.

6. Doppeldeckel nach einem der Ansprüche 1 bis 4,
**dadurch gekennzeichnet**,
daß das zweite Deckelteil (2) an seiner Oberseite (14) und an seiner Unterseite (16) Kühlrippen (15,17) aufweist.

7. Doppeldeckel nach einem der Ansprüche 1 bis 6,
**dadurch gekennzeichnet**,
daß das erste Deckelteil (1) und das zweite Deckelteil (2) durch wenigstens einen Steg (8) miteinander verbunden sind.

8. Doppeldeckel nach einem der Ansprüche 1 bis 7,
**dadurch gekennzeichnet**,
daß das erste Deckelteil (1) einen umlaufenden Dichtungsring aufweist.

9. Doppeldeckel nach einem der Ansprüche 1 bis 8,
**dadurch gekennzeichnet**,
daß das zweite Deckelteil (2) einen umlaufenden Dichtungsring aufweist.
